# EUROPEAN PATENT APPLICATION

(11) **EP 4 748 474 A1**
(43) Date of publication of application: **27.05.2026**
(21) Application number: 25217446.1
(22) Date of filing: 20.11.2025
(51) Int. Cl.: B01D 53/02

(54) **DEPOSITION OF ADSORBENT MATERIAL AND/OR CATALYST MATERIAL ON METAL SURFACES OF A CHEMICAL PROCESSING APPARATUS**

(30) Priority: 20.11.2024 US 202463722634 P
(71) Applicant: Services Pétroliers Schlumberger, 75007 Paris (FR); Schlumberger Technology B.V., 2514 JG The Hague (NL)
(72) Inventor: GEDDES, Jill, Cambridge, CB3 0EL (GB); MEREDITH, Andrew, Cambridge, CB4 2DB (GB); CAMPOS DE FARIA, Debora, Cambridge, CB3 0EL (GB); ARUNACHALAM, Karthikeyan, Cambridge, CB3 0EL (GB); RAMIER, Julien, Cambridge, CB3 0EL (GB)
(74) Representative: Schlumberger Intellectual Property Department

(57) **Abstract**

An apparatus is provided for use in a chemical process, which includes at least one metal tube or flow channel having at least one surface with at least one organic linker attached thereto. The at least one organic linker has first and second molecular groups, wherein the first molecular group is configured to bind to the at least one surface, and wherein the second molecular group is configured to bind to at least one compound that functions as an adsorbent or catalyst in the chemical process in order to attach the at least one compound to the at least one surface. Methods of constructing an apparatus for use in a chemical process are also described and claimed.

## Description

### CROSS-REFERENCE TO RELATED APPLICAION(S)

The present disclosure claims priority from U.S. Prov. Appl. No. 63/722634, filed on November 20, 2024, herein incorporated by reference in its entirety.

### FIELD

The present disclosure relates to chemical processing methods and systems that use adsorbents and/or catalysts in a chemical process.

### BACKGROUND

There are well-known adsorbent materials (such as zeolites, activated carbon, alumina, resins, metal organic framework (MOF) compounds, or covalent organic framework (COF) compounds) that have a high specific surface area and function to selectively adsorb certain molecules from a gas or liquid mixture that is in contact with it. These adsorbent materials find application in a wide range of chemical processes, such as the removal of carbon dioxide or hydrogen sulfide from a stream in a chemical plant (e.g., cleaning up a feed of hydrogen for use in the production of ammonia). By adsorbing the gas onto the material and separating it from the fluid passing through the vessel, the adsorbed molecule can be subsequently released by temperature or pressure changes (regenerating the adsorbent for subsequent cycling) to produce a concentrated stream of the molecules for subsequent processing.

Chemical processing systems have been developed where adsorbent material is coated onto the walls of a metal tube or system of pathways. For example, see Chaitanya Dhoke, Abdelghafour Zaabout, Schalk Cloete, and Shahriar Amini, "Review on Reactor Configurations for Adsorption-Based CO2 Capture," Industrial & Engineering Chemistry Research, 2021, 60 (10), 3779-3798; DOI: 10.1021/acs.iecr.0c04547. The adsorbent material coating can be applied by flowing a slurry through the chemical processing system. This process relies on physisorption mechanisms to trap a thin-layer of adsorbent material on the metal walls of the chemical processing system.

The design of the chemical processing system can provide a number of advantages, including:
(a) low pressure drops for the fluid flow through the system, which translates into creating open columns with limited tortuosity and high permeability to fluid flow; this favors creating open channels through the adsorbent by attaching the adsorbent to the wall of a channel, and allowing the fluid to pass through the center of the channel);
(b) efficient heat transfer from the adsorbent material; many adsorption processes are exothermic, causing the adsorbent material to heat up; to maximize loading of the molecules(s) by the adsorbent material, it is beneficial to remove this heat; thus, attaching the adsorbent material to the material of the metal wall of the reactor which has high thermal conductivity allows for heat transfer from the adsorbent material; likewise, if heat energy is used to desorb the adsorbed molecules, attachment to a metal substrate provides a route to efficiently transfer heat to the adsorbent material; and
(c) fast mass transfer into and out of the adsorbent material; since mass transfer is largely diffusion controlled, and diffusion timescales scale as the square of the thickness, deposition of the adsorption material as a thin layer on the walls of the metal tube or system of pathways allows rapid cycling of the reactor and helps minimize material and equipment costs.

However, the prior art chemical processing systems employ a simple physisorption mechanism to apply a slurry containing adsorbent material onto metal surfaces of the systems, which can result in poor attachment of the adsorbent material onto the metal surfaces of the reactor. Similar problems can arise with respect to catalyst material applied to the metal surfaces of the chemical processing systems. Such problems can result in separation of the adsorbent material and/or the catalyst material from the metal surfaces of the system, which can flake off with fluctuations in pressure, temperature or flowrate of fluids through the system. Such problems can negatively impact the effectiveness, performance and lifetime of the system.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In accordance with the present disclosure, an apparatus for use in a chemical process includes at least one metal tube or flow channel having at least one surface with at least one organic linker attached thereto. The at least one organic linker has first and second molecular groups. The first molecular group is configured to bind to the at least one surface. The second molecular group is configured to bind to at least one compound that functions as an adsorbent or catalyst in the chemical process in order to attach the at least one compound to the at least one surface.

In embodiments, the first and second molecular groups can be terminal end groups or other functional groups of the organic linker.

In embodiments, a pretreatment can be applied to the at least one surface of the at least one metal tube or flow channel to facilitate binding of the first molecular group of the organic linker to the at least one surface.

In embodiments, the pretreatment can involve grinding, bead blasting or pre-corroding the at least one surface, which is configured to change characteristics of the at least one surface to facilitate binding of the first molecular group of the organic linker to the at least one surface.

In embodiments, the pretreatment can involve at least one thermal treatment, which is configured to change characteristics of the at least one surface to facilitate binding of the first molecular group of the organic linker to the at least one surface.

In embodiments, the at least one compound that is bound to the second molecular group of the organic linker can include a metal organic framework (MOF) adsorbent material.

In embodiments, the at least one compound that is bound to the second molecular group of the organic linker can include at least one adsorbent compound selected from the group including one or more metal organic framework (MOF) materials, one or more alumina materials, one or more activated carbon materials, one or more zeolite materials, one or more resin materials, one or more carbon organic framework (COF) materials, or combinations thereof.

In embodiments, the at least one compound that is bound to the second molecular group of the organic linker can include at least one adsorbent compound which functions to selectively adsorb certain molecules from a gas or liquid mixture that is flowed into the apparatus. The adsorbed molecules can be released from the at least one adsorbent compound by temperature or pressure changes.

In embodiments, the at least one compound that is bound to the second molecular group of the organic linker can include at least one catalyst compound which functions as a catalyst for chemical reactions that occur as a gas or liquid mixture is flowed into the apparatus.

Methods of constructing an apparatus for use in a chemical process are also described and claimed.

### BRIEF DESCRIPTION OF THE DRAWINGS

The subject disclosure is further described in the detailed description which follows, in reference to the noted plurality of drawings by way of non-limiting examples of embodiments of the subject disclosure, in which like reference numerals represent similar parts throughout the several views of the drawings, and wherein:

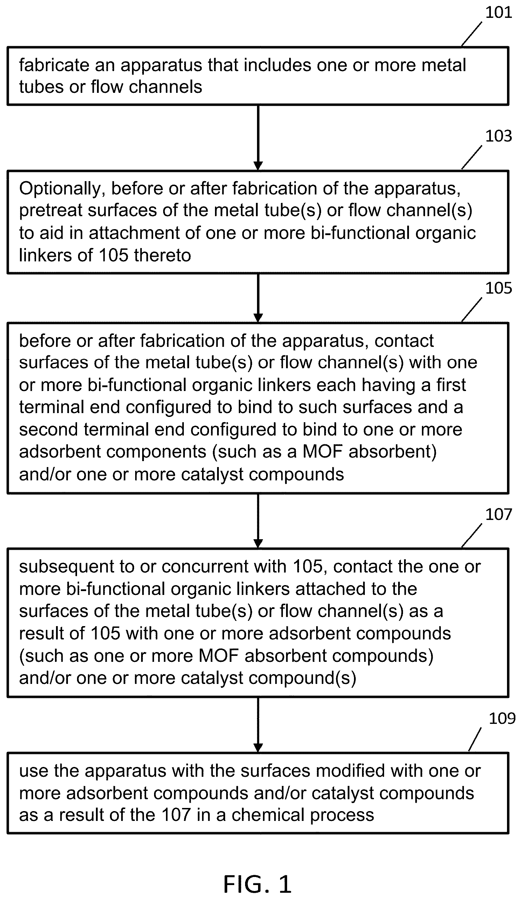

Figure 1 illustrates a method that builds an apparatus for use in a chemical process in accordance with the present disclosure.

### DETAILED DESCRIPTION

The particulars shown herein are by way of example and for purposes of illustrative discussion of the embodiments of the subject disclosure only and are presented in the cause of providing what is believed to be the most useful and readily understood description of the principles and conceptual aspects of the subject disclosure. In this regard, no attempt is made to show structural details in more detail than is necessary for the fundamental understanding of the subject disclosure, the description taken with the drawings making apparent to those skilled in the art how the several forms of the subject disclosure may be embodied in practice. Furthermore, like reference numbers and designations in the various drawings indicate like elements.

Figure 1 illustrates a method that builds an apparatus for use in a chemical process in accordance with the present disclosure.

In 101, an apparatus is fabricated that includes one or more metal tubes or flow channels. The metal can be steel or other suitable metal. Steel can be used due to its cost, strength, ductility etc. The microstructure of the metal that forms surfaces of the metal tubes or flow channels can be configured to include binding sites for one or more bi-functional organic linkers of 105. For example, heat treatment/processing (e.g., annealing, hot-rolling, or other temperature processing) and/or alloying processes can be used for this purpose. In embodiments, the microstructure of the metal that forms surfaces of the metal tubes or flow channels can be a homogeneous microstructure that provides binding sites for a particular bi-functional organic linker of 105. Additionally, or alternatively, microstructure of the metal that forms surfaces of the metal tubes or flow channels can be a heterogeneous microstructure that provides binding sites in different locations for the first molecular group of the bi-functional organic linker(s) of 105.

In optional 103, before or after fabrication of the apparatus, surfaces of the metal tubes or flow channels can be pretreated to change characteristics of such surfaces to aid in attachment of one or more bi-functional organic linkers of 105 thereto. Such pretreating can involve increasing surface roughness, for example, by grinding, bead blasting or pre-corroding. Additionally, or alternatively, the pretreating can remove corrosion products, scale, oxide film, etc. on such surfaces. For example, grinding and bead blasting pretreatments can change the surface texture or exposed surface area to facilitate attachment of one or more bi-functional organic linkers. In another example, pre-corrosion can make changes to the chemical composition of the surface such that certain metal phases (cementite) and/or alloying element are enhanced and/or corrosion products/scale are formed, which can facilitate attachment of one or more bi-functional organic linkers to the surfaces.

In 105, before or after fabrication of the apparatus, surfaces of the metal tubes or flow channels are contacted with one or more bi-functional organic linkers each having a first molecular group configured to bind to such surfaces and a second molecular group configured to bind to one or more adsorbent compounds (such as a MOF adsorbent compound) and/or one or more catalyst compounds. The first molecular group of the one or more bi-functional organic linkers functions to attach the one or more bi-functional organic linkers to such surfaces. In embodiments, the first molecular group and the second molecular group of the bi-functional organic linker(s) can be terminal end groups or other functional groups of the bi-functional organic linker(s).

In 107, which can be subsequent to or concurrent with 105, the one or more bi-functional organic linkers attached to the surfaces of the metal tubes or flow channels as a result of 105 are contacted with one or more adsorbent compounds (such as one or more MOF adsorbent compounds) and/or one or more catalyst compounds. The second molecular group of the one or more bi-functional organic linkers can function to attach the one or more bi-functional organic linkers to the one or more adsorbent compounds. In this manner, the one or more bi-functional organic linkers can create a strong chemical bond between the one or more adsorbent compounds and the surfaces of the metal tubes or flow channels of the apparatus. Additionally, or alternatively, the second molecular group of the one or more bi-functional organic linkers can function to attach the one or more bi-functional organic linkers to the one or more catalyst compounds. In this manner, the one or more bi-functional organic linkers can create a strong chemical bond between the one or more catalyst compounds and the surfaces of the metal tubes or flow channels of the apparatus.

In 105, the bi-functional organic linker(s) can be laid down as a fluid that contacts the surfaces of the metal tubes or flow channels. In 107, the one or more adsorbent compounds and/or the one or more catalyst compounds can be laid down as part of a slurry that contacts the bi-functional organic linker(s) attached to the surfaces of the metal tubes or flow channels as a result of 105. The bi-functional organic linker(s) can be laid down in 105 prior to laying down the slurry in 107 or can be added to the slurry laid down in 107.

In embodiments, one or more adsorbent compounds of 107 can include one or more MOF materials, one or more alumina materials, one or more activated carbon materials, one or more zeolite materials, one or more resin materials, one or more covalent organic framework (COF) materials, or combinations thereof.

In 109, the apparatus with the surfaces modified with one or more adsorbent compounds and/or catalyst compounds as a result of the 107 can be used in a chemical process, such as a chemical process that separates molecular components from gas or liquid mixtures (for example, using chemical processes such as pressure or thermal swing adsorption). In embodiments, the one or more adsorbent compounds of the apparatus can function to selectively adsorb certain molecules from a gas or liquid mixture that is flowed into the apparatus. The adsorbed molecules can be released from the one or more adsorbent compounds by temperature or pressure changes, which regenerates the one or more adsorbent compounds for subsequent cycling. Additionally, or alternatively, the one or more catalyst compounds of the apparatus can function as a catalyst for chemical reactions that occur as a gas or liquid mixture is flowed into the apparatus.

The metal tube or flow channel of the apparatus can employ a variety of topologies.

For example, the metal tube or flow channel can be configured as a network of metal tubes or flow channels. In one embodiment, the network of metal tubes or flow channels can employ a honeycomb structure commonly used in parallel passage reactors. In this configuration, the internal wall surfaces of the honeycomb structure can be modified with one or more adsorbent compounds and/or catalyst compounds as described herein. In another embodiment, the network of metal tubes or flow channels can employ a bundle of tubes. In this configuration, the internal wall surfaces of the tubes can be modified with one or more adsorbent compounds and/or catalyst compounds as described herein.

In other embodiments, the metal tube or flow channel of the apparatus can be modular structures where one set of surfaces are modified with one adsorbent compound and/or catalyst compound, and another set of surfaces are modified with another adsorbent compound and/or catalyst compound.

In yet other embodiments, the metal tube or flow channel of the apparatus can be a simple tube where the inside surface of the tube is modified with one adsorbent compound and/or catalyst compound. The outer surface of the tube can optionally be modified with another adsorbent compound and/or catalyst compound.

These surfaces of the metal tube(s) or flow channel(s) of the apparatus can be treated and functionalized separately from one another. One or more of these systems can be arranged in sets in series or parallel to create a sophisticated adsorbent system that will enable novel processes.

In embodiments, the first molecular group of the bi-functional organic linker(s) can include carboxylic terminal groups or other carboxylic functional groups that bind to metal (i.e., steel) surfaces of the tube(s) or flow channel(s) of the apparatus. The carboxylic group is a functional group with a formula (COOH) which reacts with metal oxide on the steel surface. This reaction typically involves the loss of a proton (H⁺) to form a negatively charged carboxylate group (COO⁻). The second molecular group of the bi-functional organic linker(s) can include phosphonic terminal groups or other phosphonic functional groups that bind to the adsorbent compound(s) of the apparatus. A phosphonic terminal group is a functional group with the formula -PO(OH)₂ at the end of a molecule's carbon backbone. When deprotonated, the phosphonic functional group forms a phosphonate anion, -PO(O⁻)₂. In embodiments, the carboxylic group or phosphonic functional group of the bi-functional organic linker(s) can bind to a metal oxide or to metal centers of a MOF that form one or more surfaces of the apparatus.

In other embodiments, the first and second molecular groups of the bi-functional organic linker(s) can include organic molecules containing, O, N, and/or S, where electrons can be donated to one or more metal surfaces of the tube(s) or flow channel(s) of the apparatus. Illustrative examples of the organic molecules include amino acids, alcohols, amines, nitrite, phosphonic acid, ethylenediamine, carboxylic acid, sulfonic acid, phenol, triphosphoric acid, imidazole, pyridine. These are typical classes of corrosion inhibitors and bind to metal surfaces (depending on environment - acid/alkaline).

In embodiments, one or more catalyst compounds of the functionalized apparatus can include:
- Pt/Al₂O₃ for oxidation of carbon monoxide;
- TiO₂, SiO₂, NiFe₂O₄ for amide synthesis;
- Pt/SiO₂ for hydrogenation of C=C and C=O bonds (e.g.: cinnamaldehyde);
- Pd/ZnO for hydrogenation of 2-methyl-3-butyn-2-ol (MBY);
- PdZn/ZnO for hydrogenation of CO₂ to methanol;
- Ni or Ni-based catalysts for partial oxidation of methane;
- Co-based catalysts for partial oxidation of methane;
- Cu-Ni and LaZnAlO₄, or Cu-Ni and γ-Al₂O₃ catalysts for methanol;
- Fe-based catalysts for ammonia synthesis;
- Ru/Al₂O₃ catalysts for ammonia decomposition;
- Ni-based and Ru-based catalysts for CO₂ methanation and
- Fe- and Co-based catalysts for conversion of carbon dioxide to syngas.

In embodiments, the second molecular group of the bi-functional organic linker(s) can include:
- amine groups that bind to Ni-, Pd- and Pt-based catalysts (e.g.: HOOC-(CH₂)n-NH₂);
- phosphine groups that bind to transition metals (e.g.: HOOC-(CH₂)n-PPh₂) of the catalyst compound(s);
- imidazole or pyridine to provide binding sites to catalytic metals (e.g.: HOOC-(CH₂)n-imidazole);
- carboxyl groups that bind to MOF metal centers of the catalyst compound(s);
- imidazole that binds to MOF linkers and metal nodes of the catalyst compound(s); and
linkers (such as phenyl, pyrene, carboxylic acid, hydroxyl (e.g.: HOOC-(CH₂)n-Ph, NH₂-(CH₂)n-Ph, HOOC-(CH₂)n-imidazole)) that bind to an activated carbon substrate of the catalyst compound(s).

In embodiments, the bi-functional organic linker(s) can be attached to the surfaces of the metal tube(s) or flow channel(s) of the apparatus and contacted with one or more catalyst compounds. The first molecular group of the bi-functional organic linker(s) can function to attach the bi-functional organic linker(s) to such surfaces. The second molecular group of the bi-functional organic linker(s) can function to attach the bi-functional organic linker(s) to the one or more catalyst compounds. In this manner, the bi-functional organic linker(s) can create a strong chemical bond between the one or more catalyst compounds and the surfaces of the metal tube(s) or flow channel(s) of the apparatus.

Advantageously, the apparatus designs of the present application bind adsorbent material and/or catalyst material to metal surfaces with the aim of producing a stable, high-performance column/parallel passage system. The one or more adsorbent compounds (i.e., adsorbent material) of the apparatus can be used to efficiently separate molecular components from gas or liquid mixtures (for example, using chemical processes such as pressure or thermal swing adsorption). The one or more catalyst compounds (i.e., catalyst material) of the apparatus can be used to improve the efficiency of a chemical reaction that occurs as a gas or liquid mixture is flowed into the apparatus.

There have been described and illustrated herein several embodiments of an apparatus for use in a chemical process that employs organic linkers to bind one or more adsorbent compounds or one or more catalyst compounds to metal surfaces. While particular embodiments have been described with respect to bi-functional organic linkers that bind one or more adsorbent compounds or catalyst compounds to the metal surfaces of the apparatus, it will be appreciated that other organic linkers with molecular groups that bind one or more adsorbent compounds and/or one or more catalyst compounds to the metal surfaces of the apparatus can be used. While particular embodiments have been described, it is not intended that the invention be limited thereto, as it is intended that the invention be as broad in scope as the art will allow and that the specification be read likewise.

## Claims

1. An apparatus for use in a chemical process, comprising:
at least one metal tube or flow channel having at least one surface with at least one organic linker attached thereto, wherein the at least one organic linker has first and second molecular groups, wherein the first molecular group is configured to bind to the at least one surface, and wherein the second molecular group is configured to bind to at least one compound that functions as an adsorbent or catalyst in the chemical process in order to attach the at least one compound to the at least one surface.

2. The apparatus of claim 1, wherein:
the first and second molecular groups comprise terminal end groups or other functional groups of the organic linker.

3. The apparatus of claim 1 or 2, wherein:
a pretreatment is applied to the at least one surface of the at least one metal tube or flow channel to facilitate binding of the first molecular group of the organic linker to the at least one surface.

4. The apparatus of claim 3, wherein:
the pretreatment involves grinding, bead blasting or pre-corroding the at least one surface, which is configured to change characteristics of the at least one surface to facilitate binding of the first molecular group of the organic linker to the at least one surface; and/or
the pretreatment involves at least one thermal treatment, which is configured to change characteristics of the at least one surface to facilitate binding of the first molecular group of the organic linker to the at least one surface.

5. The apparatus of any one of the preceding claims, wherein:
the at least one compound that is bound to the second molecular group of the organic linker comprises a metal organic framework (MOF) adsorbent material; and/or
the at least one compound that is bound to the second molecular group of the organic linker comprises at least one adsorbent compound selected from the group including one or more metal organic framework (MOF) materials, one or more alumina materials, one or more activated carbon materials, one or more zeolite materials, one or more resin materials, one or more carbon organic framework (COF) materials, or combinations thereof; and/or
the at least one compound that is bound to the second molecular group of the organic linker comprises at least one adsorbent compound which functions to selectively adsorb certain molecules from a gas or liquid mixture that is flowed into the apparatus, wherein the adsorbed molecules are released from the at least one adsorbent compound by temperature or pressure changes; and/or
the at least one compound that is bound to the second molecular group of the at least one organic linker comprises at least one catalyst compound which functions as a catalyst for chemical reactions that occur as a gas or liquid mixture is flowed into the apparatus.

6. The apparatus of any one of the preceding claims, wherein:
the first molecular group of the organic linker includes carboxylic terminal groups or other carboxylic functional groups that bind to metal surfaces of the at least one metal tube or flow channel.

7. The apparatus of any one of the preceding claims, wherein:
the second molecular group of the organic linker includes phosphonic terminal groups or other phosphonic functional groups that bind to at least one adsorbent compound; and/or
the second molecular group of the organic linker is configured to bind to at least one catalyst compound.

8. The apparatus of claim 7, wherein:
the second molecular group comprises at least one of: amine groups, phosphine groups, imidazole or pyridine, carboxyl groups, imidazole, and linkers that bind to an activated carbon substrate.

9. The apparatus of any one of the preceding claims, wherein:
the at least one metal tube or flow channel comprises a network of metal tubes or flow channels.

10. A method of constructing an apparatus for use in a chemical process, the method comprising:
attaching at least one organic linker to at least one surface of at least one metal tube or flow channel of the apparatus, wherein the at least one organic linker has first and second molecular groups, wherein the first molecular group is configured to bind to the at least one surface, and wherein the second molecular group is configured to bind to at least one compound that functions as an adsorbent or catalyst in the chemical process; and
attaching the at least one compound to the at least one organic linker that is attached to the at least one surface of the at least one metal tube or flow channel in order to attach the at least one compound to the at least one surface.

11. The method of claim 10, wherein:
applying a pretreatment to the at least one surface of the at least one metal tube or flow channel to facilitate binding of the first molecular group of the organic linker to the at least one surface.

12. The method of claim 11, wherein:
the pretreatment involves grinding, bead blasting or pre-corroding the at least one surface, which is configured to change characteristics of the at least one surface to facilitate binding of the first molecular group of the organic linker to the at least one surface; and/or
the pretreatment involves at least one thermal treatment, which is configured to change characteristics of the at least one surface to facilitate binding of the first molecular group of the organic linker to the at least one surface.

13. The method of claim 10, 11 or 12, wherein:
the at least one compound that is bound to the second molecular group of the organic linker comprises a metal organic framework (MOF) adsorbent material; and/or
the at least one compound that is bound to the second molecular group of the organic linker comprises at least one adsorbent compound selected from the group including one or more metal organic framework (MOF) materials, one or more alumina materials, one or more activated carbon materials, one or more zeolite materials, one or more resin materials, one or more carbon organic framework (COF) materials, or combinations thereof; and/or
the at least one compound that is bound to the second molecular group of the organic linker comprises at least one adsorbent compound which functions to selectively adsorb certain molecules from a gas or liquid mixture that is flowed into the apparatus, wherein the adsorbed molecules are released from the at least one adsorbent compound by temperature or pressure change; and/or.
the at least one compound that is bound to the second molecular group of the at least one organic linker comprises at least one catalyst compound which functions as a catalyst for chemical reactions that occur as a gas or liquid mixture is flowed into the apparatus.

14. The method of any one of the claims 10 - 13, wherein:
the first molecular group of the organic linker includes carboxylic terminal groups or other carboxylic functional groups that bind to metal surfaces of the at least one metal tube or flow channel; and/or
the second molecular group of the organic linker includes phosphonic terminal groups or other phosphonic functional groups that bind to at least one adsorbent compound; and/or
the second molecular group is configured to bind to at least one catalyst compound.

15. The method of any one of the claims 10 - 14, wherein:
the at least one metal tube or flow channel comprises a network of metal tubes or flow channels; and/or
the at least one compound is laid down on the at least one surface by contacting the at least one surface with a slurry that includes the at least one compound; and/or
the at least one organic linker is laid down on the at least one surface of the at least one metal tube or flow channel prior to or concurrent with the slurry.
